# EUROPÄISCHE PATENTSCHRIFT

(11) **EP 3 888 948 B1**
(45) Veröffentlichungstag und Bekanntmachung des Hinweises auf die Patenterteilung: **13.03.2024**
(21) Anmeldenummer: 20211173.8
(22) Anmeldetag: 02.12.2020
(51) Int. Cl.: B60C 11/04, B60C 11/03, B60C 11/12, B60C 11/13

(54) **FAHRZEUGLUFTREIFEN, INSBESONDERE NUTZFAHRZEUGREIFEN**
PNEUMATIC VEHICLE TYRES, IN PARTICULAR INDUSTRIAL VEHICLE TYRE
PNEUMATIQUES DE VEHICULE, EN PARTICULIER POUR UN VEHICULE UTILITAIRE

(30) Priorität: 01.04.2020 DE 102020204226
(43) Veröffentlichungstag der Anmeldung: 06.10.2021
(73) Patentinhaber: Continental Reifen Deutschland GmbH, 30175 Hannover (DE)
(72) Erfinder: Gastrich, Holger - c/o Continental AG, 30419 Hannover (DE); Dettmer, Fabian - c/o Continental AG, 30419 Hannover (DE)
(74) Vertreter: Continental Corporation

(56) Entgegenhaltungen:
- EP-A1- 1 782 970
- EP-A1- 3 381 718
- EP-A2- 2 191 984
- WO-A1-2013/150143
- DE-A1- 1 755 265
- FR-A1- 3 058 927
- US-A- 3 534 798
- US-A- 3 770 040

## Beschreibung

Die Erfindung betrifft einen Fahrzeugluftreifen, insbesondere einen Nutzfahrzeugreifen, mit einem Laufstreifen mit einer Anzahl von durch Umfangsrillen voneinander getrennten Profilrippen, wobei der Laufstreifen zumindest eine Umfangsrille aufweist, welche sich in radialer Richtung und beginnend bei der Laufstreifenperipherie aus einer ausschließlich in Umfangsrichtung vorliegenden Wellenform verlaufenden Außenrille und einer Innenrille zusammensetzt, welche an ihrer breitesten Stelle eine Breite aufweist, die um mindestens 1,00 mm größer ist als die Breite eines an die Innenrille unmittelbar anschließenden Abschnittes der Außenrille, wobei die Breiten jeweils an den Stellen mit der größten Breite ermittelt sind und wobei sich die Außenrille in radialer Richtung aus einem an der Laufstreifenperipherie trichterartig verbreiterten äußeren Abschnitt und dem an die Innenrille anschließenden Abschnitt zusammensetzt.

Ein derartiger Fahrzeugluftreifen ist beispielsweise aus der US 3 534 798 A bekannt. Der Reifen weist einen Laufstreifen mit Profilrippen und Umfangsrillen auf, wobei zu den Umfangsrillen eine zentrale Umfangsrille und gegenüber dieser schmäler ausgeführte, weitere Umfangsrillen gehören. Die weiteren Umfangsrillen setzen sich in radialer Richtung jeweils aus einer in Draufsicht in Umfangsrichtung wellenförmig verlaufenden Außenrille und einer Innenrille mit einer Breite von 0,15 Zoll zusammen. Die Außenrille weist einen an die Innenrille anschließenden Abschnitt mit einer Breite von 0,05 Zoll und einen trichterartig verbreiterten äußeren Abschnitt mit einer an der Laufstreifenperipherie ermittelten Breite von 0,23 Zoll auf. Der Reifen soll ein gutes Wasserdrainageverhalten aufweisen.

Ein weiterer Fahrzeugluftreifen der eingangs genannten Art ist aus der EP 3 381 718 A1 bekannt. Der Fahrzeugluftreifen weist einen Laufstreifen mit Profilrippen auf, welche von einer zentralen Umfangsrille und von weiteren Umfangsrillen getrennt sind. Die weiteren Umfangsrillen weisen jeweils eine in Draufsicht wellenförmig verlaufende Außenrille und eine im Querschnitt kreisförmige Innenrille auf, wobei sich die Außenrille aus einem trichterartig verbreiterten äußeren Abschnitt und einem an die Innenrille anschließenden Abschnitt zusammensetzt. Gemäß einer Ausführung weist der äußere Abschnitt der Außenrille eine größere Breite als die Innenrille auf. Der Reifen soll ein gutes Wasserdrainageverhalten, eine hohe Steifigkeit und einen geringen Rollwiderstand aufweisen.

Aus der DE 17 55 265 A1 ist ein weiterer Fahrzeugluftreifen einem Laufstreifen mit Profilrippen und Umfangsrillen, welche jeweils eine in Draufsicht wellenförmig verlaufenden Außenrille mit einer Breite von beispielsweise 1,27 mm und eine Innenrille mit einer Breite von beispielsweise 3,8 mm aufweisen, bekannt. Die Umfangsrille ist mit über ihre Umfangserstreckung verteilt ausgebildeten, in radialer Richtung verlaufenden, in die Innenrille einmündenden und gegenüber der Außenrille breiter ausgeführten Kanälen versehen. Der Reifen soll gute Wasserableiteigenschaften aufweisen.

Die EP 2 191 984 A2 offenbart einen Fahrzeugluftreifen mit einem Laufstreifen mit zumindest einer Umfangsrille aus einer Außenrille und einer Innenrille. Gemäß einem Ausführungsbeispiel verläuft die Außenrille in Draufsicht wellenförmig und weist eine gegenüber der Breite der Innenrille kleiner ausgeführte Breite von höchstens 7 mm auf. Die Innenrille weist eine Querschnittsfläche auf, welche über mindestens 80% der Umfangslänge der Umfangsrille zumindest das Zweifache der Querschnittsfläche der Außenrille beträgt. Die Umfangsrillen können ferner mit von der Laufstreifenperipherie ausgehenden, in die Innenrillen einmündenden, lokale Öffnungen versehen sein. Die Umfangsrillen sollen im Hinblick auf ihre Rissbeständigkeit verbesserte Rillengründe aufweisen. Die lokalen Öffnungen unterstützen eine Belüftung und Kühlung der Innenrille, was sich günstig auf die Gürtelhaltbarkeit auswirkt.

Aus der US 3 770 040 A ist ein Fahrzeugluftreifen mit einem Laufstreifen mit vier Umfangsrillen, welche in Draufsicht jeweils in Zickzack-Wellenform verlaufen, bekannt. Die beiden mittleren Umfangsrillen setzen sich aus einer in radialer Richtung verlaufenden Außenrille und einer im Querschnitt trapezförmigen Innenrille zusammen. Entlang des Rillengrunds der Innenrille ist ein in Umfangsrichtung umlaufender Draht angeordnet, welcher nach entsprechendem Abrieb des Laufstreifens einfallendes Licht reflektiert.

Die EP 1 782 970 A1 offenbart einen Fahrzeugluftreifen mit einem Laufstreifen mit Profilblöcken, welche mit Rillen versehen sind, die sich jeweils aus einer wellenförmig verlaufenden, einschnittartigen Außenrille und einer kanalförmigen Innenrille zusammensetzen.

Aus der WO 2013/150143 A1 ist ein Fahrzeugluftreifen mit einem Laufstreifen mit schulterseitigen Umfangsrillen, welche sich jeweils aus einer einschnittartigen Außenrille und einer Innenrille zusammensetzen, bekannt.

Die FR 3 058 927 A1 offenbart einen Fahrzeugluftreifen mit einem Laufstreifen mit einem zentralen Laufstreifenbereich, welcher durch Umfangs- und Querrillen aus jeweils einer einschnittartigen Außenrille und einer kanalförmigen Innenrille blockartig strukturiert ist.

Aus der EP 2 546 075 A1 ist ein Nutzfahrzeugreifen bekannt, dessen Laufstreifen durch Umfangsrillen in Profilrippen gegliedert ist, wobei entlang des Reifenäquators und schulterseitig jeweils eine Umfangsrille verläuft, welche sich aus einer schmalen Außenrille und einer gegenüber dieser breiteren Innenrille zusammensetzt, wobei letztere bei zunehmendem Abrieb des Laufstreifens zum Vorschein kommt. Zwischen diesen Umfangsrillen verlaufen üblich breite Umfangsrillen. Die zwischen den Umfangsrillen gebildeten Profilrippen sind durch Einschnitte in Blöcke gegliedert. Dieser Nutzfahrzeugreifen soll insbesondere für das Fahren auf winterlichen und rutschigen Untergründen gut geeignet sein. Aus der WO 2015/114128 A1 ist ein weiterer Nutzfahrzeugreifen eingangs genannter Art bekannt, dessen Laufstreifen schulterseitig je eine breite Umfangsrille aufweist. Im mittleren Bereich des Laufstreifens, zwischen den beiden breiten Umfangsrillen sind drei in Umfangsrichtung umlaufende Umfangsrillen ausgebildet, welche sich jeweils aus einer schmalen Außenrille und einer gegenüber dieser breiteren Innenrille zusammensetzen.

Umfangsrillen mit schmalen Außenrillen und gegenüber diesen breiteren Innenrillen sind vor allem im zentralen bzw. mittleren Laufstreifenbereich von Nutzfahrzeugreifen von Vorteil. Die meist einschnittartig schmalen Außenrillen sorgen zu Beginn des Laufstreifenabriebs für eine hohe Profilsteifigkeit, daher auch für einen geringen und gleichmäßigen Abrieb des Laufstreifens und sind für einen geringen Rollwiderstand des Reifens von Vorteil. Die bei entsprechend abgeriebenem Laufstreifen als breitere Umfangsrillen zum Vorschein kommenden Innenrillen sorgen für gute Nassgriffeigenschaften und gute Bremseigenschaften auf Nässe.

Der Erfindung liegt die Aufgabe zugrunde, einen Nutzfahrzeugreifen der eingangs genannten Art derart zu gestalten, dass der den Rollwiderstand vermindernde Effekt der Außenrillen erhalten bleibt und die Griff - und Traktionseigenschaften, insbesondere auf nassem, vereistem, verschneitem, weichem, matschigem oder schottrigem Untergrund bei neuem Reifen bzw. solange die Außenrillen noch nicht durch Abrieb verschwunden sind, verbessert sind.

Gelöst wird die gestellte Aufgabe erfindungsgemäß dadurch, dass der trichterartig verbreiterte äußere Abschnitt an der Laufstreifenperipherie eine Breite aufweist, die höchstens der Breite der Innenrille entspricht.

Gemäß der Erfindung werden durch die in Wellenform verlaufende Außenrille Griffkanten zur Verfügung gestellt, die für einen verbesserten Griff und eine verbesserte Traktion des Reifens, insbesondere auf nassem, vereistem, verschneitem, weichem, matschigem oder schottrigem Untergrund sorgen. Der Rollwiderstand des Reifens bleibt durch diese Maßnahmen weitgehend unbeeinflusst, da die Außenrille nach wie vor für eine hohe Profilsteifigkeit sorgt. Der trichterartig verbreiterte äußere Abschnitt unterstützt bei neuem Reifen die Wasserableitung auf nassen Straßen und auf weichem Untergrund, wie Matsch oder Schnee, für eine Verbesserung der Traktionseigenschaften.

Bei einer bevorzugten Ausführung verläuft die Außenrille gemäß einer gerundeten, beispielsweise sinusähnlichen oder sinusförmigen Wellenform oder gemäß einer Zickzack-Wellenform, insbesondere gemäß einer gleichmäßigen Wellenform. Eine gleichmäßige Wellenform ist insbesondere eine solche, bei welcher die Wellen über ihren Verlauf eine konstante Amplitude und eine konstante Wellenlänge aufweist. Diese Maßnahmen sind insbesondere für einen gleichmäßigen Abrieb des Laufstreifens von Vorteil.

Gemäß einer weiteren bevorzugten Ausführung beträgt die Amplitude der Wellenform der Außenrille 0,50 mm bis 20,00 mm, insbesondere bis 10,00 mm, die Wellenlänge der Wellenform der Außenrille beträgt 5,00 mm bis 50,00 mm, insbesondere bis 30,00 mm. Wellenlänge und Amplitude werden insbesondere auf die Dimension des jeweiligen Nutzfahrzeugreifens sowie auf den Einsatzzweck des Nutzfahrzeugreifens abgestimmt.

Bevorzugt ist ferner eine Ausführung, bei der die Innenrille in radialer Richtung eine Erstreckungslänge, welche zwischen der tiefsten Stelle der Innenrille und der Einmündungsstelle der Außenrille ermittelt wird, von 3,00 mm bis 20,00 mm, insbesondere von 5,00 mm bis 10,00 mm, aufweist. Die Innenrille weist ferne an ihrer breitesten Stelle bevorzugt eine Breite von 3,00 mm bis 15,00 mm auf. Die Innenrillen kommen bei entsprechend abgeriebenem Laufstreifen als breitere Umfangsrillen zum Vorschein, sodass sie, bezüglich ihrer Abmessungen auf die Laufstreifendicke bzw. die jeweilige Dimension des Nutzfahrzeugreifens und dessen Einsatzzweck abgestimmt, für gute Bremseigenschaften auf Nässe sorgen können.

Was die Außenrille betrifft, ist es bevorzugt, wenn diese in radialer Richtung eine Erstreckungslänge von 3,00 mm bis 20,00 mm, insbesondere von 5,00 mm bis 10,00 mm aufweist. Bevorzugt beträgt weiters die Breite des unmittelbar an die Innenrille anschließenden Abschnittes der Außenrille 0,50 mm bis 5,00 mm, insbesondere bis zu 2,00 mm. Die Außenrille sorgt, ebenfalls in Abstimmung mit der Laufstreifendicke bzw. der Reifendimension, zu Beginn des Laufstreifenabriebs bzw. bei neuem Reifen für eine höhere Profil steifigkeit.

Bei einer weiteren bevorzugten Ausführung ist der trichterartig verbreiterte äußere Abschnitt im Querschnitt von zwei Rillenflankenabschnitten begrenzt, die unter einem Winkel von 25° bis 70°, insbesondere von 45° bis 70°, zur radialen Richtung verlaufen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Querschnitt eines Nutzfahrzeugreifens, welcher nicht unter den Gegenstand der Ansprüche fällt,
Fig. 2 im Querschnitt eine Ausführungsvariante einer mit Außen- und Innenrille ausgeführten Umfangsrille, welche ebenfalls nicht unter den Gegenstand der Ansprüche fällt,
Fig. 3 im Querschnitt eine Ausführungsvariante einer mit Außen- und Innenrille ausgeführten Umfangsrille,
Fig. 4 bis Fig. 7 Draufsichten auf Umfangsabschnitte unterschiedlicher Ausführungsvarianten von mit Außen- und Innenrillen ausgeführten Umfangsrillen, welche ebenfalls nicht unter den Gegenstand der Ansprüche fallen und
Fig. 8 und Fig. 9 Draufsichten auf Umfangsabschnitte unterschiedlicher Ausführungsvarianten von mit Außen- und Innenrillen ausgeführten Umfangsrillen.

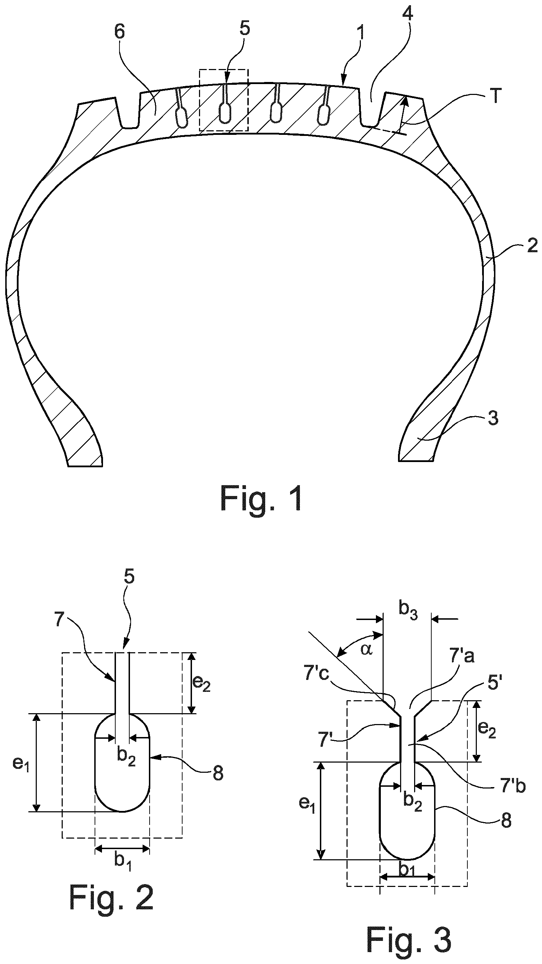

Fig. 1 zeigt einen vereinfachten Querschnitt eines Nutzfahrzeugreifens in Radialbauart, beispielsweise eines Reifens für Schwerlastfahrzeuge, wie Lastkraftwagen, oder für Busse. Der Nutzfahrzeugreifen weist einen Laufstreifen 1, Seitenwände 2 und Wulstbereiche 3 auf. Die den Reifen in herkömmlicher Weise verstärkenden Bauteile, wie ein mehrlagiger Gürtelverband, eine ein- oder mehrlagige Karkasseinlage sowie Wulstkerne mit Verstärkungselementen, Verstärkungsstreifen und dergleichen in den Wulstbereichen 3, sind nicht dargestellt. Der Laufstreifen 1 weist im gezeigten Beispiel schulterseitig je eine breite, auf die vorgesehene Profiltiefe T ausgeführte Umfangsrille 4 und zwischen den beiden Umfangsrillen 4 vier weitere Umfangsrillen 5 auf. Die Ausgestaltung des Laufstreifens 1 kann von der dargestellten Ausführung abweichen, beispielsweise indem mehr als zwei breite Umfangsrillen 4 und zwischen diesen jeweils eine oder zwei Umfangsrillen 5 vorgesehen sind. Die breiten Umfangsrillen 4 können gerade, zickzack- oder wellenförmig in Umfangsrichtung verlaufen. Sämtliche Umfangsrillen 4, 5 gliedern den Laufstreifen 1 in Profilrippen 6, welche durch nicht dargestellte Querrillen, Schrägrillen, Einschnitte und dergleichen in Profilblöcke oder profilblockartig gegliedert sein können.

Fig. 2 zeigt einen vergrößerten Querschnitt einer Umfangsrille 5, Fig. 3 einen vergrößerten Querschnitt einer Variante der Umfangsrille, welche mit der Bezugsziffer 5' versehen ist. Die Umfangsrille 5 setzt sich in radialer Richtung und beginnend bei der Laufstreifenperipherie aus einer schmalen Außenrille 7 und einer gegenüber dieser breiteren Innenrille 8 zusammen. Bei der in Fig. 3 gezeigten Ausführung setzt sich die Umfangsrille 5' aus einer Außenrille 7' und einer Innenrille 8 zusammen, wobei sich die Außenrille 7`, beginnend bei der Laufstreifenperipherie, aus einem im Querschnitt trichterartig verbreiterten äußeren Abschnitt 7'a und einem schmalen Abschnitt 7'b zusammensetzt, wobei letzterer schmäler ist als die Innenrille 8.

Fig. 2 und Fig. 3 zeigen ferner eine bevorzugte Ausführung der Innenrille 8 mit einer in radialer Richtung länglichen Querschnittsfläche und einer in radialer Richtung vorliegenden Erstreckungslänge ei, welche zwischen der tiefsten Stelle der Innenrille 8 und der Einmündungsstelle der Außenrille 7, 7' ermittelt wird und 3,00 mm bis 20,00 mm, insbesondere 5,00 mm bis 10,00 mm, beträgt, in Abhängigkeit von der Dicke des Laufstreifens 1 und der Größe der Profiltiefe T. Die Breite bi der Innenrille 8 an ihrer breitesten Stelle beträgt 3,00 mm bis 15,00 mm. Die Innenrille 8 ist bei den gezeigten Ausführungsvarianten im Querschnitt oval, sie kann jedoch im Querschnitt auch gerundet rechteckig, elliptisch, ellipsenähnlich, kreisförmig oder angenähert kreisförmig ausgeführt sein.

Die Außenrillen 7, 7' erstrecken sich in radialer Richtung über eine Erstreckungslänge e₂ von 3,00 mm bis 20,00 mm, insbesondere 5,00 mm bis 10,00 mm, ebenfalls je nach der Größe der Profiltiefe T und der Dicke des Laufstreifens 1. Die Außenrille 7 und der schmale Abschnitt 7'b der Außenrille 7' weisen jeweils eine insbesondere konstante Breite b₂ von 0,50 mm bis 5,00 mm, insbesondere von bis zu 2,00 mm, auf, wobei die Breite b₂ um mindestens 1,00 mm geringer ist als die Breite b₁ der Innenrille 8.

Der trichterartig verbreiterte äußere Abschnitt 7'a der Außenrille 7' ist im Querschnitt von zwei Rillenflankenabschnitten 7`c begrenzt, die unter einem Winkel α von 25° bis 70°, insbesondere von 45° bis 70°, zur radialen Richtung verlaufen. An der Laufstreifenperipherie weist der radial äußere Abschnitt 7'a eine Breite b₃ auf, die höchstens der Breite b₁ der Innenrille 8 entspricht, insbesondere ist b₃ um mindestens 1,00 mm größer als die Breite b₂ des schmalen Abschnittes 7'b.

Die Außenrillen 7, 7' verlaufen in Umfangsrichtung in einer Wellenform, insbesondere in einer gerundeten, beispielsweise sinusähnlichen oder sinusförmigen Wellenform oder in einer Zickzack-Wellenform.

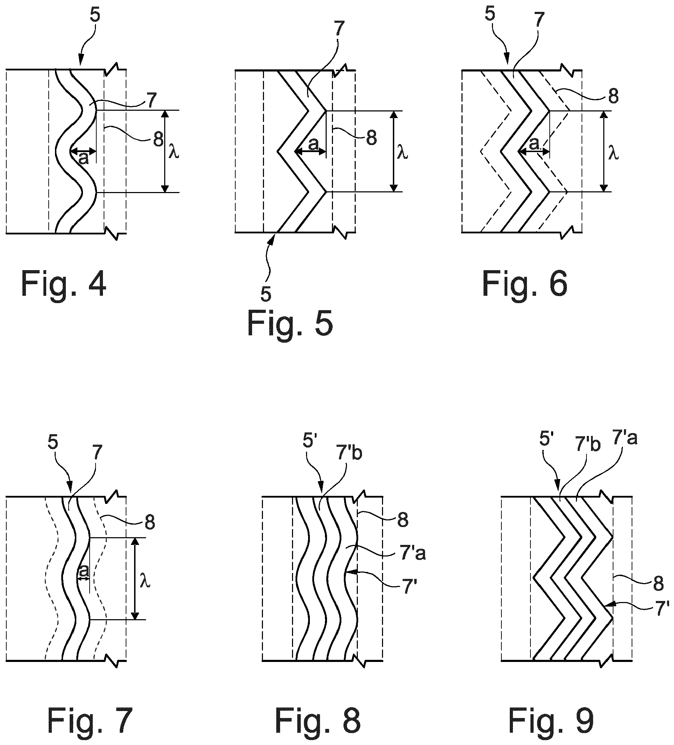

Bevorzugte und unterschiedliche Ausführungsvarianten des Verlaufs der Außenrillen 7, 7', zum Teil in Kombination mit einer ebenfalls in Umfangsrichtung vorliegenden Wellenform der Innenrillen 8, werden nun anhand der Figuren 4 bis 9, welche jeweils einen Umfangsabschnitt einer Ausführungsform einer Umfangsrille 5 oder 5' zeigen, näher beschrieben. Der Verlauf der zugehörigen Innenrillen 8 ist jeweils gestrichelt eingezeichnet. Die Wellenform der Außenrillen 7, 7' ist insbesondere gleichmäßig mit konstanter Amplitude a und konstanter oder mit der Pitchfolge variierender Wellenlänge λ, wobei die Amplitude a der Wellenform 0,50 mm bis 20,00 mm, insbesondere bis zu 10,00 mm, die Wellenlänge λ der Wellenform 5,00 mm bis 50,00 mm, insbesondere bis 30,00 mm beträgt.

Fig. 4 zeigt eine Ausführungsform einer Umfangsrille 5 mit einer gerade in Umfangsrichtung verlaufenden Innenrille 8 und einer in gerundeter Wellenform verlaufenden Außenrille 7. Bei der in Fig. 5 gezeigten Ausführung einer Umfangsrille 5 verläuft die Innenrille 8 ebenfalls gerade, die Außenrille 7 in einer Zickzack-Wellenform. Bei den in Fig. 6 und Fig. 7 gezeigten Ausführungen verlaufen die Innenrillen 8 in einer gerundeten Wellenform (Fig. 7) bzw. einer Zickzack-Wellenform (Fig. 6), die zugehörigen Außenrillen 7 in einer gleichermaßen verlaufenden gerundeten Wellenform bzw. Zickzack-Wellenform. Bei den in Fig. 8 und 9 gezeigten Ausführungsformen von Umfangsrillen 5' verlaufen die Innenrillen 8 in Umfangsrichtung gerade, die Außenrillen 7' in einer gerundeten Wellenform (Fig. 8) bzw. einer Zickzack-Wellenform (Fig. 9).

Möglich sind ferner weitere Ausführungsformen, bei welchen beispielsweise eine in Zickzackform verlaufende Außenrille mit einer in gerundeter Wellenform verlaufenden Innenrille kombiniert wird oder eine Ausführungsform, bei welcher eine in gerundeter Wellenform verlaufende Innenrille mit einer in Zickzack-Wellenform verlaufenden Außenrille in Kombination vorliegt.

### Bezugszeichenliste

### (Teil der Beschreibung)

- 1: Laufstreifen
- 2: Seitenwand
- 3: Wulstbereich
- 4: Umfangsrille
- 5, 5: Umfangsrille
- 6: Profilrippe
- 7, 7': Außenrille
- 7`a, 7'b: Abschnitt
- 7'c: Rillenflankenabschnitt
- 8: Innenrille
- a: Amplitude
- b₁, b₂, b₃: Breite
- e₁, e₂: Erstreckungslänge
- T: Profiltiefe
- α: Winkel
- λ: Wellenlänge

## Patentansprüche

1. Fahrzeugluftreifen, insbesondere Nutzfahrzeugreifen, mit einem Laufstreifen (1) mit einer Anzahl von durch Umfangsrillen (4, 5') voneinander getrennten Profilrippen (6), wobei der Laufstreifen (1) zumindest eine Umfangsrille (5') aufweist, welche sich in radialer Richtung und beginnend bei der Laufstreifenperipherie aus einer ausschließlich in Umfangsrichtung vorliegenden Wellenform verlaufenden Außenrille (7') und einer Innenrille (8) zusammensetzt, welche an ihrer breitesten Stelle eine Breite (b₁) aufweist, die um mindestens 1,00 mm größer ist als die Breite (b₂) eines an die Innenrille (8) unmittelbar anschließenden Abschnittes (7'b) der Außenrille (7'), wobei die Breiten (bi, b₂) jeweils an den Stellen mit der größten Breite ermittelt sind und wobei sich die Außenrille (7') in radialer Richtung aus einem an der Laufstreifenperipherie trichterartig verbreiterten äußeren Abschnitt (7'a) und dem an die Innenrille (8) anschließenden Abschnitt (7'b) zusammensetzt,
**dadurch gekennzeichnet,**
**dass** der trichterartig verbreiterte äußere Abschnitt (7'a) an der Laufstreifenperipherie eine Breite (b₃) aufweist, die höchstens der Breite (b₁) der Innenrille (8) entspricht.

2. Fahrzeugluftreifen nach Anspruch 1, **dadurch gekennzeichnet, dass** die Außenrille (7') gemäß einer gerundeten, beispielsweise sinusähnlichen oder sinusförmigen, Wellenform oder gemäß eine Zickzack-Wellenform verläuft.

3. Fahrzeugluftreifen nach Anspruch 1 oder 2, **dadurch gekennzeichnet, dass** die Außenrille (7') gemäß einer gleichmäßigen Wellenform verläuft.

4. Fahrzeugluftreifen nach einem der Ansprüche 1 bis 3, **dadurch gekennzeichnet, dass** die Amplitude (a) der Wellenform der Außenrille (7') 0,50 mm bis 20,00 mm, insbesondere bis 10,00 mm, beträgt.

5. Fahrzeugluftreifen nach einem der Ansprüche 1 bis 4, **dadurch gekennzeichnet, dass** die Wellenlänge (λ) der Wellenform der Außenrille (7') 5,00 mm bis 50,00 mm, insbesondere bis 30,00 mm, beträgt.

6. Fahrzeugluftreifen nach einem der Ansprüche 1 bis 5, **dadurch gekennzeichnet, dass** die Innenrille (8) in radialer Richtung eine Erstreckungslänge (e₁), welche zwischen der tiefsten Stelle der Innenrille (8) und der Einmündungsstelle der Außenrille (7') ermittelt wird, von 3,00 mm bis 20,00 mm, insbesondere von 5,00 mm bis 10,00 mm, aufweist.

7. Fahrzeugluftreifen nach einem oder mehreren der Ansprüche 1 bis 6, **dadurch gekennzeichnet, dass** die Außenrille (7') in radialer Richtung eine Erstreckungslänge (e₂) von 3,00 mm bis 20,00 mm, insbesondere von 5,00 mm bis 10,00 mm, aufweist.

8. Fahrzeugluftreifen nach einem oder mehreren der Ansprüche 1 bis 7, **dadurch gekennzeichnet, dass** die Breite (b₁) der Innenrille (8) an ihrer breitesten Stelle 3,00 mm bis 15,00 mm beträgt.

9. Fahrzeugluftreifen nach einem der Ansprüche 1 bis 8, **dadurch gekennzeichnet, dass** die Breite (b₂) des unmittelbar an die Innenrille (8) anschließenden Abschnittes (7'b) der Außenrille (7') 0,50 mm bis 5,00 mm, insbesondere bis zu 2,00 mm, beträgt.

10. Fahrzeugluftreifen nach einem der Ansprüche 1 bis 9, **dadurch gekennzeichnet, dass** der trichterartig verbreiterte äußere Abschnitt (7'a) im Querschnitt von zwei Rillenflankenabschnitten (7'c) begrenzt ist, die unter einem Winkel (α) von 25° bis 70°, insbesondere von 45° bis 70°, zur radialen Richtung verlaufen.

## Claims

1. Pneumatic vehicle tyre, in particular utility-vehicle tyre, having a tread (1) with a number of profile ribs (6) which are separated from one another by circumferential channels (4, 5'), wherein the tread (1) has at least one circumferential channel (5') which, in a radial direction starting at the tread periphery, is made up of an outer channel (7`), which extends with a waveform that is present exclusively in a circumferential direction, and of an inner channel (8), which, at its widest point, has a width (b₁) which is at least 1.00 mm greater than the width (b₂) of a portion (7'b) of the outer channel (7') that directly adjoins the inner channel (8), wherein the widths (b₁, b₂) are in each case determined at the points with the greatest width, and wherein the outer channel (7') is made up in the radial direction of an outer portion (7'a), which is widened in a funnel-like manner at the tread periphery, and of the portion (7'b) adjoining the inner channel (8), **characterized**
**in that**, at the tread periphery, the outer portion (7'a) widened in a funnel-like manner has a width (b₃) which corresponds at most to the width (b₁) of the inner channel (8).

2. Pneumatic vehicle tyre according to Claim 1, **characterized in that** the outer channel (7') extends according to a rounded, for example sine-like or sinusoidal, waveform or according to a zigzag waveform.

3. Pneumatic vehicle tyre according to Claim 1 or 2, **characterized in that** the outer channel (7') extends according to a uniform waveform.

4. Pneumatic vehicle tyre according to one of Claims 1 to 3, **characterized in that** the amplitude (a) of the waveform of the outer channel (7') is 0.50 mm to 20.00 mm, in particular to 10.00 mm.

5. Pneumatic vehicle tyre according to one of Claims 1 to 4, **characterized in that** the wavelength (λ) of the waveform of the outer channel (7') is 5.00 mm to 50.00 mm, in particular to 30.00 mm.

6. Pneumatic vehicle tyre according to one of Claims 1 to 5, **characterized in that**, in the radial direction, the inner channel (8) has an extent length (e₁), determined between the lowest point of the inner channel (8) and the opening-in point of the outer channel (7'), of 3.00 mm to 20.00 mm, in particular of 5.00 mm to 10.00 mm.

7. Pneumatic vehicle tyre according to one or more of Claims 1 to 6, **characterized in that**, in the radial direction, the outer channel (7') has an extent length (e₂) of 3.00 mm to 20.00 mm, in particular of 5.00 mm to 10.00 mm.

8. Pneumatic vehicle tyre according to one or more of Claims 1 to 7, **characterized in that** the width (b₁) of the inner channel (8) at its widest point is 3.00 mm to 15.00 mm.

9. Pneumatic vehicle tyre according to one of Claims 1 to 8, **characterized in that** the width (b₂) of that portion (7'b) of the outer channel (7') which directly adjoins the inner channel (8) is 0.50 mm to 5.00 mm, in particular to 2.00 mm.

10. Pneumatic vehicle tyre according to one or more of Claims 1 to 9, **characterized in that**, in cross section, the outer portion (7'a) widened in a funnel-like manner is delimited by two channel-flank portions (7'c) which extend at an angle (α) of 25° to 70°, in particular of 45° to 70°, to the radial direction.

## Revendications

1. Pneumatique de véhicule, notamment pneu de véhicule utilitaire, avec une bande de roulement (1) avec un nombre de nervures de profil (6) séparées les unes des autres par des rainures circonférentielles (4, 5'), la bande de roulement (1) présentant au moins une rainure circonférentielle (5') qui se compose, dans la direction radiale et en commençant à la périphérie de la bande de roulement, d'une rainure extérieure (7') s'étendant exclusivement sous forme d'onde dans la direction circonférentielle et d'une rainure intérieure (8) qui présente à son emplacement le plus large une largeur (b₁), qui est supérieure d'au moins 1,00 mm à la largeur (b₂) d'une section (7'b) de la rainure extérieure (7') se raccordant directement à la rainure intérieure (8), les largeurs (bi, b₂) étant déterminées respectivement aux emplacements présentant la plus grande largeur et la rainure extérieure (7') se composant, dans la direction radiale, d'une section extérieure (7'a) élargie à la manière d'un entonnoir sur la périphérie de la bande de roulement et de la section (7'b) se raccordant à la rainure intérieure (8), **caractérisé en ce que**
la section extérieure (7'a) élargie à la manière d'un entonnoir présente, sur la périphérie de la bande de roulement, une largeur (b₃) qui correspond au plus à la largeur (b₁) de la rainure intérieure (8).

2. Pneumatique de véhicule selon la revendication 1, **caractérisé en ce que** la rainure extérieure (7') s'étend selon une forme d'onde arrondie, par exemple sinusoïdale, ou selon une forme d'onde en zigzag.

3. Pneumatique de véhicule selon la revendication 1 ou 2, **caractérisé en ce que** la rainure extérieure (7') s'étend selon une forme d'onde régulière.

4. Pneumatique de véhicule selon l'une quelconque des revendications 1 à 3, **caractérisé en ce que** l'amplitude (a) de la forme d'onde de la rainure extérieure (7') est de 0,50 mm à 20,00 mm, notamment jusqu'à 10,00 mm.

5. Pneumatique de véhicule selon l'une quelconque des revendications 1 à 4, **caractérisé en ce que** la longueur d'onde (λ) de la forme d'onde de la rainure extérieure (7') est de 5,00 mm à 50,00 mm, notamment jusqu'à 30,00 mm.

6. Pneumatique de véhicule selon l'une quelconque des revendications 1 à 5, **caractérisé en ce que** la rainure intérieure (8) présente, dans la direction radiale, une longueur d'extension (e₁), qui est déterminée entre l'emplacement le plus bas de la rainure intérieure (8) et l'emplacement d'embouchure de la rainure extérieure (7'), de 3,00 mm à 20,00 mm, notamment de 5,00 mm à 10,00 mm.

7. Pneumatique de véhicule selon une ou plusieurs des revendications 1 à 6, **caractérisé en ce que** la rainure extérieure (7') présente, dans la direction radiale, une longueur d'extension (e₂) de 3,00 mm à 20,00 mm, notamment de 5,00 mm à 10,00 mm.

8. Pneumatique de véhicule selon une ou plusieurs des revendications 1 à 7, **caractérisé en ce que** la largeur (b₁) de la rainure intérieure (8) à son emplacement le plus large est de 3,00 mm à 15,00 mm.

9. Pneumatique de véhicule selon l'une quelconque des revendications 1 à 8, **caractérisé en ce que** la largeur (b₂) de la section (7'b) de la rainure extérieure (7') qui se raccorde directement à la rainure intérieure (8) est de 0,50 mm à 5,00 mm, notamment jusqu'à 2,00 mm.

10. Pneumatique de véhicule selon l'une quelconque des revendications 1 à 9, **caractérisé en ce que** la section extérieure (7'a) élargie à la manière d'un entonnoir est délimitée en section transversale par deux sections de flancs de rainure (7'c) qui s'étendent selon un angle (α) de 25° à 70°, notamment de 45° à 70°, par rapport à la direction radiale.
